# EUROPEAN PATENT SPECIFICATION

(11) **EP 4 447 683 B1**
(45) Date of publication and mention of the grant of the patent: **13.08.2025**
(21) Application number: 22835732.3
(22) Date of filing: 13.12.2022
(51) Int. Cl.: A01N 43/80, A01N 47/20, A01P 21/00, A01N 65/22

(54) **USE OF ISOXAZOLINECARBOXAMIDE FOR SPROUT INHIBITION**
VERWENDUNG VON ISOXAZOLINCARBOXAMID ZUR KEIMUNGSHEMMUNG
UTILISATION D'ISOXAZOLINECARBOXAMIDE POUR L'INHIBITION DE LA GERMINATION

(30) Priority: 15.12.2021 EP 21214606
(43) Date of publication of application: 23.10.2024
(73) Proprietor: Bayer Aktiengesellschaft, 51373 Leverkusen (DE)
(72) Inventor: LORENTZ, Lothar, 51373 Leverkusen (DE); EBBINGHAUS, Dirk, 51373 Leverkusen (DE); DECKWER, Roland, 51373 Leverkusen (DE); NUTTELMANN, Klaus, 51373 Leverkusen (DE); HAAS, Matthias, 51373 Leverkusen (DE); KÜHNHOLD, Volker, 51373 Leverkusen (DE); SMIT, Thomas Alexander Maria, 3641 RT Mijdrecht (NL); TOSSENS, Herve, 1831 Diegem, Machelen (BE)
(74) Representative: BIP Patents
(86) International application number: PCT/EP2022/085516
(87) International publication number: WO 2023/110813

(56) References cited:
- WO-A1-2020/114932
- ANONYMOUS: "Sprout Inhibitors in World", 11 March 2021 (2021-03-11), XP055917508, Retrieved from the Internet <URL:https://web.archive.org/web/20210311191735/https://www.potatopro.com/about/sprout-inhibitors> [retrieved on 20220503]

## Description

The invention relates to the field of food storage, more specifically to the use of methyl(2R*,4R*)-4-[[(5S)-3-(3,5-difluorophenyl)-5-vinyl-4H-isoxazole-5-carbonyl]amino]tetrahydrofuran-2-carboxy-late (I) for sprout inhibition in crops, the use of combinations or compositions comprising thereof for sprout inhibition in crops and a method for controlling sprouts on crops.

Potatoes harvested in fall are frequently expected to be stored through the winter and far into the coming spring at least until early potatoes are available again. Even with the cool storage of potatoes, as is usually done in the potato-processing industry, the potatoes start to sprout even after a few weeks when stored at 6 to 8° C and are considerably sprouted after three to four months.

Other crops like onions, cassava *(Manihot esculenta),* sweet potatoes (*Ipomoea batatas*), yams *(Dioscorea* spp.), tobinambur *(Helianthus tuberosus),* ginger *(Zingiber officinale)* are affected by this problem as well.

The use of sprout-inhibiting agents has been known for a long time. Known sprout inhibitors are certain ethereal oils, in particular peppermints and also those of the "muna' plant, which is related to peppermint. Peppermint oils and "muna' oils are relatively expensive, so that any industrial application based only on said ethereal oils is not feasible.

The chemical agents recently used for sprout inhibition in connection with potatoes include propham: isopropylphenyl carbamate alone or in combination with chloropropham.

Also known are medium-chain and long-chain alcohols, in particular C₁₇-C₂₄-alcohols which are collected in industry. Said alcohols are frequently combined with propham and/or chloropropham when used as sprout inhibitors.

WO 93/00008 discloses aromatic aldehydes or alcohols or thymol or mixtures thereof useful as sprout inhibiting agent. EP 0 287 946 A2 describes the use of an ethereal oil from a mentha type, in particular oils of Mentha piperiga L, as well as peppermint oil and oils of different types of mint to decrease tuberous sprouts. The website www.potatopro.com/about/sprout-inhibitors describes a list of sprout inhibitors in use.

As mentioned above, the exclusive use of ethereal oils is prohibitive for practical reasons because the amounts required even when the potatoes are stored without oxygen generally come to 10 to 20 ml oil per 50 kg potatoes with a storage duration of 50 days, and to about twice said amount with a storage duration of 100 days and longer, provided the storage conditions lead to only minor loss of the oils, and that the potatoes are stored at +3° to +8° C.

WO 94/28716 A2 discloses rape oil methylester as a sprout inhibitor, if needed in mixture with the known medium- and long-chain alcohols and/or ethereal oils and/or the known chemical sprout inhibiting agents, whereby combinations of rape oil methylester, alcohol and, if need, one of the aforementioned ethereal oils, in particular peppermint oil, are preferred in order to achieve the best results.

Compounds from the structural class of substituted isoxazolinecarboxamides are known as herbicides useful for weed-control against a broad range of weeds from WO2018/228985 and WO2019/145245 in bum-down applications. It is also known to combine such herbicidal active ingredients with some other herbicides for weed control, see e. g. WO 2020/114932.

Now, it has been found that some compounds selected from the above group of substituted isoxazolinecarboxamides surprisingly can be used for sprout inhibition without or without substantial injury to the harvested crop and on the other hand high efficiency regarding sprout inhibition.

One object of the invention is the use of methyl(2R*,4R*)-4-[[(5S)-3-(3,5-difluorophenyl)-5-vinyl-4H-isoxazole-5-carbonyl]amino]tetrahydrofuran-2-carboxylate (I), which exists in the form of two stereoisomers: Methyl(2R,4R)-4-[[(5S)-3-(3,5-difluorophenyl)-5-vinyl-4H-isoxazole-5-carbonyl]-amino]tetrahydrofuran-2-carboxylate of formula (Ia) and methyl (2S,4S)-4-[[(5S)-3-(3,5-difluorophenyl)-5-vinyl-4H-isoxazole-5-carbonyl]amino]tetrahydrofuran-2-carboxylate of formula (Ib), for sprout inhibition:

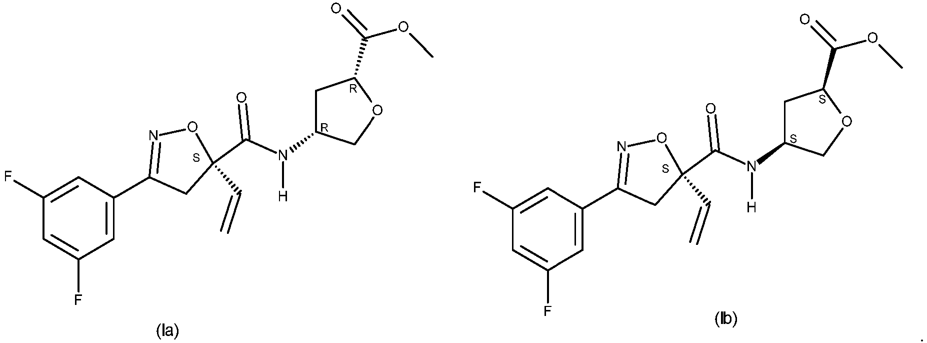

Another object of the invention is the use of methyl(2R*,4R*)-4-[[(5S)-3-(3,5-difluorophenyl)-5-vinyl-4H-isoxazole-5-carbonyl]amino]tetrahydrofuran-2-carboxylate (I) in combination with at least one additional sprout inhibitor for sprout inhibition.

Another object of the invention is the use of methyl(2R*,4R*)-4-[[(5S)-3-(3,5-difluorophenyl)-5-vinyl-4H-isoxazole-5-carbonyl]amino]tetrahydrofuran-2-carboxylate (I) in combination with at least one additional active ingredient for sprout inhibition.

Another object of the invention is the use of methyl(2R*,4R*)-4-[[(5S)-3-(3,5-difluorophenyl)-5-vinyl-4H-isoxazole-5-carbonyl]amino]tetrahydrofuran-2-carboxylate **(I)** in combination with at least one additional active ingredient and at least one additional sprout inhibitor for sprout inhibition.

Another object of the invention is the use of methyl(2R*,4R*)-4-[[(5S)-3-(3,5-difluorophenyl)-5-vinyl-4H-isoxazole-5-carbonyl]amino]tetrahydrofuran-2-carboxylate **(I)** in combination with at least one additional herbicide for sprout inhibition.

Another object of the invention is the use of methyl(2R*,4R*)-4-[[(5S)-3-(3,5-difluorophenyl)-5-vinyl-4H-isoxazole-5-carbonyl]amino]tetrahydrofuran-2-carboxylate **(I)** in combination with at least one additional herbicide and at least one additional sprout inhibitor for sprout inhibition.

In another embodiment, the additional sprout inhibitor is selected from the group comprising ethylene, green mint oil, carvone, maleic hydrazide and 1,4-dimethylnaphthalene, isopropyl-(3-chlorophenyl)carbamate (CIPC, chlorpropham) extract of peppermint oil, rape oil methylester and mixtures of two or more thereof.

In a preferred embodiment, the other sprout inhibitor is selected from the group comprising isopropyl-(3-chlorophenyl)carbamate (CIPC, chlorpropham) and extract of peppermint oil and mixtures of two or more thereof.

In another embodiment, the active ingredient is selected from the group comprising herbicides, insecticides, acaricides, fungicides, safeners, fertilizers and/or growth regulators and mixtures of two or more thereof.

In a preferred embodiment, the active ingredient is one or more additional herbicide.

In another preferred embodiment, the active ingredient is one or more additional fungicide or insecticide.

### Definitions

As used in this application and unless otherwise indicated the term "herbicide" refers to a compound that is produced, sold, or used in a field in order to kill or otherwise inhibit the growth of unwanted plants such as, but not limited to, deleterious or annoying weeds, broadleaf plants, grasses, and sedges; and can be used for crop protection, edifice protection or turf protection. The term "herbicide" includes the end-use herbicidal product. This composition can be a pure compound, a solution of chemical compounds, a mixture of chemical compounds, an emulsion, a suspension, a solid-liquid mixture, or a liquid-liquid mixture. The term "herbicide" also refers to the product that passes through the commercial channels from the manufacturer to the ultimate end user who can either apply the herbicide to the affected field as sold or mix it with other excipients.

"Herbicides" disclosed in connection with the present invention include, but are not limited to, the following:
acetochlor, acifluorfen, acifluorfen-sodium, aclonifen, alachlor, allidochlor, alloxydim, alloxydim-sodium, ametryn, amicarbazone, amidochlor, amidosulfuron, 4-amino-3-chloro-6-(4-chloro-2-fluoro-3-methylphenyl)-5-fluoropyridine-2-carboxylic acid, aminocyclopyrachlor, aminocyclopyrachlor-potassium, aminocyclopyrachlor-methyl, aminopyralid, amitrole, ammoniumsulfamate, anilofos, asulam, atrazine, azafenidin, azimsulfuron, beflubutamid, benazolin, benazolin-ethyl, benfluralin, benfuresate, bensulfuron, bensulfuron-methyl, bensulide, bentazone, benzobicyclon, benzofenap, bicyclopyron, bifenox, bilanafos, bilanafos-sodium, bispyribac, bispyribac-sodium, bromacil, bromobutide, bromofenoxim, bromoxynil, bromoxynil-butyrate, -potassium, -heptanoate and - octanoate, busoxinone, butachlor, butafenacil, butamifos, butenachlor, butralin, butroxydim, butylate, cafenstrole, carbetamide, carfentrazone, carfentrazone-ethyl, chloramben, chlorbromuron, chlorfenac, chlorfenac-sodium, chlorfenprop, chlorflurenol, chlorflurenol-methyl, chloridazon, chlorimuron, chlorimuron-ethyl, chlorophthalim, chlorotoluron, chlorthal-dimethyl, chlorsulfuron, cinidon, cinidonethyl, cinosulfuron, clacyfos, clethodim, clodinafop, clodinafop-propargyl, clomazone, clomeprop, clopyralid, cloransulam, cloransulam-methyl, cumyluron, cyanamide, cyanazine, cycloate, cyclopyrimorate, cyclosulfamuron, cycloxydim, cyhalofop, cyhalofop-butyl, cyprazine, 2,4-D, 2,4-D-butotyl, -butyl, -dimethylammonium, -diolamine, -ethyl, -2-ethylhexyl, -isobutyl, -isooctyl, - isopropylammonium, -potassium, -triisopropanolammonium and -trolamine, 2,4-DB, 2,4-DB-butyl, - dimethylammonium, -isooctyl, -potassium and -sodium, daimuron (dymron), dalapon, dazomet, n-decanol, desmedipham, detosyl-pyrazolate (DTP), dicamba, dichlobenil, 2-(2,4-dichlorobenzyl)-4,4-dimethyl-1,2-oxazolidin-3-one, 2-(2,5-dichlorobenzyl)-4,4-dimethyl-1,2-oxazolidin-3-one, dichlorprop, dichlorprop-P, diclofop, diclofop-methyl, diclofop-P-methyl, diclosulam, difenzoquat, diflufenican, diflufenzopyr, diflufenzopyr-sodium, dimefuron, dimepiperate, dimethachlor, dimethametryn, dimethenamid, dimethenamid-P, dimetrasulfuron, dinitramine, dinoterb, diphenamid, diquat, diquat dibromide, dithiopyr, diuron, DNOC, endothal, EPTC, esprocarb, ethalfluralin, ethametsulfuron, ethametsulfuron-methyl, ethiozin, ethofumesate, ethoxyfen, ethoxyfen-ethyl, ethoxysulfuron, etobenzanid, F-5231, i.e. N-[2-chloro-4-fluoro-5-[4-(3-fluoropropyl)-4,5-dihydro-5-oxo-1H-tetrazol-1-yl]phenyl]ethansulfonamide, F-7967, i.e. 3-[7-chloro-5-fluoro-2-(trifluoromethyl)-1H-benzimidazol-4-yl]-1-methyl-6-(trifluoromethyl)pyrimidine-2,4(1H,3H)-dione, fenoxaprop, fenoxaprop-P, fenoxaprop-ethyl, fenoxaprop-P-ethyl, fenoxasulfone, fenquinotrione, fentrazamide, flamprop, flamprop-M-isopropyl, flamprop-M-methyl, flazasulfuron, florasulam, fluazifop, fluazifop-P, fluazifop-butyl, fluazifop-P-butyl, flucarbazone, flucarbazone-sodium, flucetosulfuron, fluchloralin, flufenacet, flufenpyr, flufenpyr-ethyl, flumetsulam, flumiclorac, flumiclorac-pentyl, flumioxazin, fluometuron, flurenol, flurenol-butyl, -dimethylammonium and -methyl, fluoroglycofen, fluoroglycofen-ethyl, flupropanate, flupyrsulfuron, flupyrsulfuron-methyl-sodium, fluridone, flurochloridone, fluroxypyr, fluroxypyr-meptyl, flurtamone, fluthiacet, fluthiacet-methyl, fomesafen, fomesafen-sodium, foramsulfuron, fosamine, glufosinate, glufosinate-ammonium, glufosinate-P-sodium, glufosinate-P-ammonium, glufosinate-P-sodium, glyphosate, glyphosate-ammonium, - isopropylammonium, -diammonium, -dimethylammonium, -potassium, -sodium and -trimesium, H-9201, i.e. O-(2,4-dimethyl-6-nitrophenyl) O-ethyl isopropylphosphoramidothioate, halauxifen, halauxifen-methyl, halosafen, halosulfuron, halosulfuron-methyl, haloxyfop, haloxyfop-P, haloxyfopethoxyethyl, haloxyfop-P-ethoxyethyl, haloxyfop-methyl, haloxyfop-P-methyl, hexazinone, HW-02, i.e. 1-(dimethoxyphosphoryl)ethyl (2,4-dichlorophenoxy)acetate, imazamethabenz, imazamethabenzmethyl, imazamox, imazamox-ammonium, imazapic, imazapic-ammonium, imazapyr, imazapyrisopropylammonium, imazaquin, imazaquin-ammonium, imazethapyr, imazethapyr-immonium, imazosulfuron, indanofan, indaziflam, iodosulfuron, iodosulfuron-methyl-sodium, ioxynil, ioxyniloctanoate, -potassium and -sodium, ipfencarbazone, isoproturon, isouron, isoxaben, isoxaflutole, karbutilate, KUH-043, i.e. 3-({[5-(difluoromethyl)-1-methyl-3-(trifluoromethyl)-1H-pyrazol-4-yl]methyl}sulfonyl)-5,5-dimethyl-4,5-dihydro-1,2-oxazole, ketospiradox, lactofen, lenacil, linuron, MCPA, MCPA-butotyl, -dimethylammonium, -2-ethylhexyl, -isopropylammonium, -potassium and - sodium, MCPB, MCPB-methyl, -ethyl and -sodium, mecoprop, mecoprop-sodium and -butotyl, mecoprop-P, mecoprop-P-butotyl, -dimethylammonium, -2-ethylhexyl and -potassium, mefenacet, mefluidide, mesosulfuron, mesosulfuron-methyl, mesotrione, methabenzthiazuron, metam, metamifop, metamitron, metazachlor, metazosulfuron, methabenzthiazuron, methiopyrsulfuron, methiozolin, methyl isothiocyanate, metobromuron, metolachlor, S-metolachlor, metosulam, metoxuron, metribuzin, metsulfuron, metsulfuron-methyl, molinate, monolinuron, monosulfuron, monosulfuron-ester, MT-5950, i.e. N-[3-chloro-4-(1-methylethyl)phenyl]-2-methylpentanamide, NGGC-011, napropamide, NC-310, i.e. 4-(2,4-dichlorobenzoyl)-1-methyl-5-benzyloxypyrazole, neburon, nicosulfuron, nonanoic acid (pelargonic acid), norflurazon, oleic acid (fatty acids), orbencarb, orthosulfamuron, oryzalin, oxadiargyl, oxadiazon, oxasulfuron, oxaziclomefon, oxyfluorfen, paraquat, paraquat dichloride, pebulate, pendimethalin, penoxsulam, pentachlorphenol, pentoxazone, pethoxamid, petroleum oils, phenmedipham, picloram, picolinafen, pinoxaden, piperophos, pretilachlor, primisulfuron, primisulfuron-methyl, prodiamine, profoxydim, prometon, prometryn, propachlor, propanil, propaquizafop, propazine, propham, propisochlor, propoxycarbazone, propoxycarbazone-sodium, propyrisulfuron, propyzamide, prosulfocarb, prosulfuron, pyraclonil, pyraflufen, pyraflufen-ethyl, pyrasulfotole, pyrazolynate (pyrazolate), pyrazosulfuron, pyrazosulfuron-ethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinmerac, quinoclamine, quizalofop, quizalofop-ethyl, quizalofop-P, quizalofop-P-ethyl, quizalofop-P-tefuryl, rimsulfuron, saflufenacil, sethoxydim, siduron, simazine, simetryn, SL-261, sulcotrion, sulfentrazone, sulfometuron, sulfometuron-methyl, sulfosulfuron, SYN-523, SYP-249, i.e. 1-ethoxy-3-methyl-1-oxobut-3-en-2-yl 5-[2-chloro-4-(trifluoromethyl)phenoxy]-2-nitrobenzoate, SYP-300, i.e. 1-[7-fluoro-3-oxo-4-(prop-2-yn-1-yl)-3,4-dihydro-2H-1,4-benzoxazin-6-yl]-3-propyl-2-thioxoimidazolidine-4,5-dione, 2,3,6-TBA, TCA (trifluoroacetic acid), TCA-sodium, tebuthiuron, tefuryltrione, tembotrione, tepraloxydim, terbacil, terbucarb, terbumeton, terbuthylazin, terbutryn, thenylchlor, thiazopyr, thiencarbazone, thiencarbazonemethyl, thifensulfuron, thifensulfuron-methyl, thiobencarb, tiafenacil, tolpyralate, topramezone, tralkoxydim, triafamone, tri-allate, triasulfuron, triaziflam, tribenuron, tribenuron-methyl, triclopyr, trietazine, trifloxysulfuron, trifloxysulfuron-sodium, trifludimoxazin, trifluralin, triflusulfuron, triflusulfuron-methyl, tritosulfuron, urea sulfate, vernolate, XDE-848, ZJ-0862, i.e. 3,4-dichloro-N-{2-[(4,6-dimethoxypyrimidin-2-yl)oxy]benzyl}aniline, and also the following compounds:

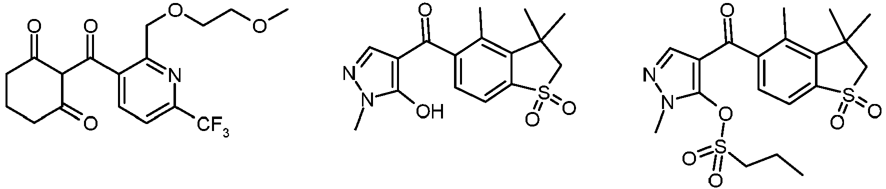

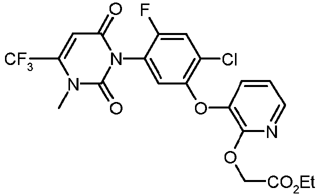

Examples of plant growth regulators as possible mixing partners are:
acibenzolar, acibenzolar-S-methyl, 5-aminolevulinic acid, ancymidol, 6-benzylaminopurine, brassinolide, catechol, chlormequat chloride, cloprop, cyclanilide, 3-(cycloprop-1-enyl)propionic acid, daminozide, dazomet, n-decanol, dikegulac, dikegulac-sodium, endothal, endothal-dipotassium, - disodium, and mono(N,N-dimethylalkylammonium), ethephon, flumetralin, flurenol, flurenol-butyl, flurprimidol, forchlorfenuron, gibberellic acid, inabenfide, indole-3-acetic acid (IAA), 4-indol-3-ylbutyric acid, isoprothiolane, probenazole, jasmonic acid, jasmonic acid methyl ester, maleic hydrazide, mepiquat chloride, 1-methylcyclopropene, 2-(1-naphthyl)acetamide, 1-naphthylacetic acid, 2-naphthyloxyacetic acid, nitrophenoxide mixture, 4-oxo-4[(2-phenylethyl)amino]butyric acid, paclobutrazole, N-phenylphthalamic acid, prohexadione, prohexadione-calcium, prohydrojasmone, salicylic acid, strigolactone, tecnazene, thidiazuron, triacontanol, trinexapac, trinexapac-ethyl, tsitodef, uniconazole, uniconazole-P.

The herbicides mentioned in the present description are known, for example, from "The Pesticide Manual", 16th edition 2012.

The term "safener" means:
Examples of useful safeners include the following groups of compounds:
S1) Compounds from the group of heterocyclic carboxylic acid derivatives:
S1^{a}) Compounds of the dichlorophenylpyrazoline-3-carboxylic acid type (S1^{a}), preferably compounds such as
   1-(2,4-dichlorophenyl)-5-(ethoxycarbonyl)-5-methyl-2-pyrazoline-3-carboxylic acid, ethyl 1-(2,4-dichlorophenyl)-5-(ethoxycarbonyl)-5-methyl-2-pyrazoline-3-carboxylate (S1-1) ("mefenpyr-diethyl"), and related compounds as described in WO-A-91/07874;
S1^{b}) Derivatives of dichlorophenylpyrazolecarboxylic acid (S1^{b}), preferably compounds such as ethyl 1-(2,4-dichlorophenyl)-5-methylpyrazole-3-carboxylate (S1-2), ethyl 1-(2,4-dichlorophenyl)-5-isopropylpyrazole-3-carboxylate (S1-3), ethyl 1-(2,4-dichlorophenyl)-5-(1,1-dimethylethyl)pyrazole-3-carboxylate (S1-4) and related compounds as described in EP-A-333 131 and EP-A-269 806;
S1^{c}) Derivatives of 1,5-diphenylpyrazole-3-carboxylic acid (S1^{c}), preferably compounds such as ethyl 1-(2,4-dichlorophenyl)-5-phenylpyrazole-3-carboxylate (S1-5), methyl 1-(2-chlorophenyl)-5-phenylpyrazole-3-carboxylate (S1-6) and related compounds as described, for example, in EP-A-268554;
S1^{d}) Compounds of the triazolecarboxylic acid type (S1^{d}), preferably compounds such as fenchlorazole (ethyl ester), i.e. ethyl 1-(2,4-dichlorophenyl)-5-trichloromethyl-1H-1,2,4-triazole-3-carboxylate (S1-7), and related compounds, as described in EP-A-174 562 and EP-A-346 620;
S1^{e}) Compounds of the 5-benzyl- or 5-phenyl-2-isoxazoline-3-carboxylic acid or of the 5,5-diphenyl-2-isoxazoline-3-carboxylic acid type (S1^{e}), preferably compounds such as ethyl 5-(2,4-dichlorobenzyl)-2-isoxazoline-3-carboxylate (S1-8) or ethyl 5-phenyl-2-isoxazoline-3-carboxylate (S1-9) and related compounds as described in WO-A-91/08202, or 5,5-diphenyl-2-isoxazolinecarboxylic acid (S1-10) or ethyl 5,5-diphenyl-2-isoxazoline-3-carboxylate (S1-11) ("isoxadifen-ethyl") or n-propyl 5,5-diphenyl-2-isoxazoline-3-carboxylate (S1-12) or ethyl 5-(4-fluorophenyl)-5-phenyl-2-isoxazoline-3-carboxylate (S1-13), as described in patent application WO-A-95/07897.
S2) Compounds from the group of the 8-quinolinoxy derivatives (S2):
S2^{a}) Compounds of the 8-quinolinoxyacetic acid type (S2^{a}), preferably 1-methylhexyl (5-chloro-8-quinolinoxy)acetate ("cloquintocet-mexyl") (S2-1), 1,3-dimethylbut-1-yl (5-chloro-8-quinolinoxy)acetate (S2-2), 4-allyloxybutyl (5-chloro-8-quinolinoxy)acetate (S2-3), 1-allyloxyprop-2-yl (5-chloro-8-quinolinoxy)acetate (S2-4), ethyl (5-chloro-8-quinolinoxy)acetate (S2-5), methyl (5-chloro-8-quinolinoxy)acetate (S2-6), allyl (5-chloro-8-quinolinoxy)acetate (S2-7), 2-(2-propylideneiminoxy)-1-ethyl (5-chloro-8-quinolinoxy)acetate (S2-8), 2-oxoprop-1-yl (5-chloro-8-quinolinoxy)acetate (S2-9) and related compounds, as described in EP-A-86 750, EP-A-94 349 and EP-A-191 736 or EP-A-0 492 366, and also (5-chloro-8-quinolinoxy)acetic acid (S2-10), hydrates and salts thereof, for example the lithium, sodium, potassium, calcium, magnesium, aluminium, iron, ammonium, quaternary ammonium, sulfonium or phosphonium salts thereof, as described in WO-A-2002/34048;
S2^{b}) Compounds of the (5-chloro-8-quinolinoxy)malonic acid type (S2^{b}), preferably compounds such as diethyl (5-chloro-8-quinolinoxy)malonate, diallyl (5-chloro-8-quinolinoxy)malonate, methyl ethyl (5-chloro-8-quinolinoxy)malonate and related compounds, as described in EP-A-0 582 198.
S3) Active compounds of the dichloroacetamide type (S3), which are frequently used as pre-emergence safeners (soil-acting safeners), for example "dichlormid" (N,N-diallyl-2,2-dichloroacetamide) (S3-1), "R-29148" (3-dichloroacetyl-2,2,5-trimethyl-1,3-oxazolidine) from Stauffer (S3-2), "R-28725" (3-dichloroacetyl-2,2-dimethyl-1,3-oxazolidine) from Stauffer (S3-3), "benoxacor" (4-dichloroacetyl-3,4-dihydro-3-methyl-2H-1,4-benzoxazine) (S3-4), "PPG-1292" (N-allyl-N-[(1,3-dioxolan-2-yl)methyl]dichloroacetamide) from PPG Industries (S3-5), "DKA-24" (N-allyl-N-[(allylaminocarbonyl)methyl]dichloroacetamide) from Sagro-Chem (S3-6), "AD-67" or "MON 4660" (3-dichloroacetyl-1-oxa-3-azaspiro[4.5]decane) from Nitrokemia or Monsanto (S3-7), "TI-35" (1-dichloroacetylazepane) from TRI-Chemical RT (S3-8), "diclonon" (dicyclonon) or "BAS145138" or "LAB145138" (S3-9) ((RS)-1-dichloroacetyl-3,3,8a-trimethylperhydropyrrolo[1,2-a]pyrimidin-6-one) from BASF, "furilazole" or "MON 13900" ((RS)-3-dichloroacetyl-5-(2-furyl)-2,2-dimethyloxazolidine) (S3-10), and the (R) isomer thereof (S3-11).
S4) Compounds from the class of the acylsulfonamides (S4):
S4^{a}) N-Acylsulfonamides of the formula (S4^{a}) and salts thereof, as described in WO-A-97/45016, 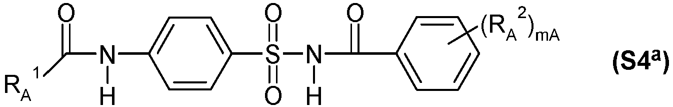 in which
   R_{A}¹ represents (C₁-C₆)-alkyl, (C₃-C₆)-cycloalkyl, where the 2 latter radicals are substituted by v_{A} substituents from the group of halogen, (C₁-C₄)-alkoxy, (C₁-C₆)-haloalkoxy and (C₁-C₄)-alkylthio and, in the case of cyclic radicals, also by (C₁-C₄)-alkyl and (C₁-C₄)-haloalkyl;
   R_{A}² represents halogen, (C₁-C₄)-alkyl, (C₁-C₄)-alkoxy, CF₃;
   m_{A}represents 1 or 2;
   v_{A} represents 0, 1, 2 or 3;
S4^{b}) Compounds of the 4-(benzoylsulfamoyl)benzamide type of the formula (S4^{b}) and salts thereof, as described in WO-A-99/16744, 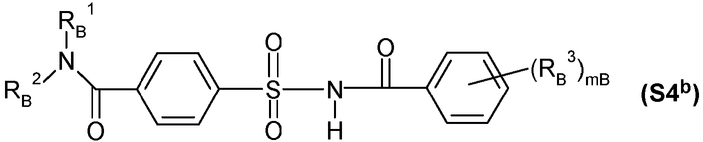 in which
   R_{B}¹, R_{B}² independently of one another represent hydrogen, (C₁-C₆)-alkyl, (C₃-C₆)-cycloalkyl, (C₃-C₆)-alkenyl, (C₃-C₆)-alkynyl,
   R_{B}³ represents halogen, (C₁-C₄)-alkyl, (C₁-C₄)-haloalkyl or (C₁-C₄)-alkoxy and
   m_{B} represents 1 or 2,
   for example those in which
   R_{B}¹= cyclopropyl, R_{B}² = hydrogen and (R_{B}³) = 2-OMe ("cyprosulfamide", S4-1),
   R_{B}¹= cyclopropyl, R_{B}² = hydrogen and (R_{B}³) = 5-Cl-2-OMe (S4-2),
   R_{B}¹ = ethyl, R_{B}² = hydrogen and (R_{B}³) = 2-OMe (S4-3),
   R_{B}¹= isopropyl, R_{B}² = hydrogen and (R_{B}³) = 5-Cl-2-OMe (S4-4) and
   R_{B}¹= isopropyl, R_{B}² = hydrogen and (R_{B}³) = 2-OMe (S4-5);
S4^{c}) Compounds from the class of the benzoylsulfamoylphenylureas of the formula (S4^{c}), as described in EP-A-365484, 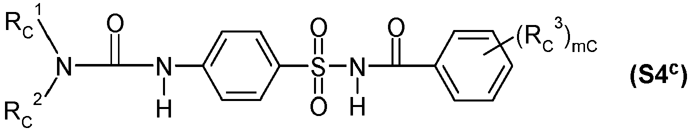 in which
   R_{C}¹, R_{C}² are independently hydrogen, (C₁-C₈)-alkyl, (C₃-C₈)-cycloalkyl, (C₃-C₆)-alkenyl, (C₃-C₆)-alkynyl,
   R_{C}³ represents halogen, (C₁-C₄)-alkyl, (C₁-C₄)-alkoxy, CF₃ and
   m_{C} represents 1 or 2;
   for example
   1-[4-(N-2-methoxybenzoylsulfamoyl)phenyl]-3-methylurea,
   1-[4-(N-2-methoxybenzoylsulfamoyl)phenyl]-3,3-dimethylurea,
   1-[4-(N-4,5-dimethylbenzoylsulfamoyl)phenyl]-3-methylurea;
S4^{d}) Compounds of the N-phenylsulfonylterephthalamide type of the formula (S4^{d}) and salts thereof, which are known, for example, from CN 101838227, 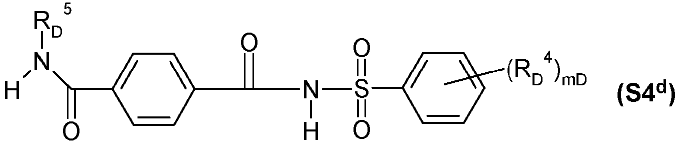 in which
   R_{D}⁴ represents halogen, (C₁-C₄)-alkyl, (C₁-C₄)-alkoxy, CF₃;
   m_{D}represents 1 or 2;
   R_{D}⁵ represents hydrogen, (C₁-C₆)-alkyl, (C₃-C₆)-cycloalkyl, (C₂-C₆)-alkenyl, (C₂-C₆)-alkynyl, (C₅-C₆)-cycloalkenyl.
S5) Active compounds from the class of the hydroxyaromatics and the aromatic-aliphatic carboxylic acid derivatives (S5), for example ethyl 3,4,5-triacetoxybenzoate, 3,5-dimethoxy-4-hydroxybenzoic acid, 3,5-dihydroxybenzoic acid, 4-hydroxysalicylic acid, 4-fluorosalicyclic acid, 2-hydroxycinnamic acid, 2,4-dichlorocinnamic acid, as described in WO-A-2004/084631, WO-A-2005/015994, WO-A-2005/016001.
S6) Active compounds from the class of the 1,2-dihydroquinoxalin-2-ones (S6), for example 1-methyl-3-(2-thienyl)-1,2-dihydroquinoxalin-2-one, 1-methyl-3-(2-thienyl)-1,2-dihydroquinoxaline-2-thione, 1-(2-aminoethyl)-3-(2-thienyl)-1,2-dihydroquinoxalin-2-one hydrochloride, 1-(2-methylsulfonylaminoethyl)-3-(2-thienyl)-1,2-dihydroquinoxalin-2-one, as described in WO-A-2005/112630.
S7) Compounds from the class of the diphenylmethoxyacetic acid derivatives (S7), e.g. methyl diphenylmethoxyacetate (CAS Reg. No. 41858-19-9) (S7-1), ethyl diphenylmethoxyacetate or diphenylmethoxyacetic acid, as described in WO-A-98/38856.
S8) Compounds of the formula (S8), as described in WO-A-98/27049, 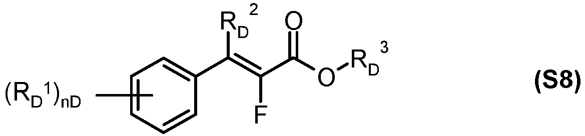 in which the symbols and indices are defined as follows:
   R_{D}¹ represents halogen, (C₁-C₄)-alkyl, (C₁-C₄)-haloalkyl, (C₁-C₄)-alkoxy, (C₁-C₄)-haloalkoxy,
   R_{D}² represents hydrogen or (C₁-C₄)-alkyl,
   R_{D}³ represents hydrogen, (C₁-C₈)-alkyl, (C₂-C₄)-alkenyl, (C₂-C₄)-alkynyl or aryl, where each of the aforementioned carbon-containing radicals is unsubstituted or substituted by one or more, preferably up to three, identical or different radicals from the group consisting of halogen and alkoxy; or salts thereof,
   n_{D} represents an integer from 0 to 2.
S9) Active compounds from the class of the 3-(5-tetrazolylcarbonyl)-2-quinolones (S9), for example 1,2-dihydro-4-hydroxy-1-ethyl-3-(5-tetrazolylcarbonyl)-2-quinolone (CAS Reg. No. 219479-18-2), 1,2-dihydro-4-hydroxy-1-methyl-3-(5-tetrazolylcarbonyl)-2-quinolone (CAS Reg. no. 95855-00-8), as described in WO-A-1999/000020;
S10) Compounds of the formula (S10^{a}) or (S10^{b})
   as described in WO-A-2007/023719 and WO-A-2007/023764 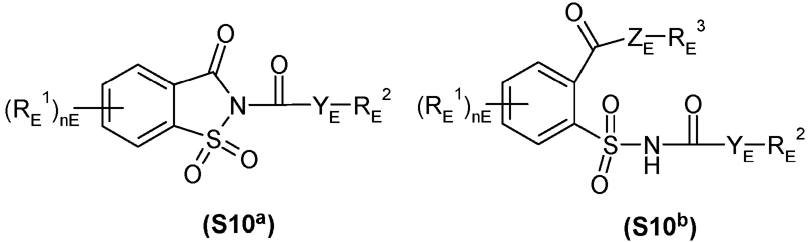 in which
   R_{E}¹ represents halogen, (C₁-C₄)-alkyl, methoxy, nitro, cyano, CF₃, OCF₃,
   Y_{E}, Z_{E} independently of one another represent O or S,
   n_{E} represents an integer from 0 to 4,
   R_{E}² represents (C₁-C₁₆)-alkyl, (C₂-C₆)-alkenyl, (C₃-C₆)-cycloalkyl, aryl; benzyl, halobenzyl,
   R_{E}³ represents hydrogen or (C₁-C₆)-alkyl.
S11) Active compounds of the oxyimino compound type (S11), which are known as seed-dressing compositions, for example "oxabetrinil" ((Z)-1,3-dioxolan-2-yl-methoxyimino(phenyl)acetonitrile) (S11-1), which is known as a seed-dressing safener for millet/sorghum against metolachlor damage,
   "fluxofenim" (1-(4-chlorophenyl)-2,2,2-trifluoro-1-ethanone O-(1,3-dioxolan-2-ylmethyl)oxime) (S11-2), which is known as a seed-dressing safener for millet/sorghum against metolachlor damage, and
   "cyometrinil" or "CGA-43089" ((Z)-cyanomethoxyimino(phenyl)acetonitrile) (S11-3), which is known as a seed-dressing safener for millet/sorghum against metolachlor damage.
S12) Active compounds from the class of the isothiochromanones (S12), for example methyl [(3-oxo-1H-2-benzothiopyran-4(3H)-ylidene)methoxy]acetate (CAS Reg. No. 205121-04-6) (S12-1) and related compounds from WO-A-1998/13361.
S13) One or more compounds from group (S13):
   "naphthalic anhydride" (1,8-naphthalenedicarboxylic anhydride) (S13-1), which is known as a seed-dressing safener for maize against thiocarbamate herbicide damage,
   "fenclorim" (4,6-dichloro-2-phenylpyrimidine) (S13-2), which is known as a safener for pretilachlor in sown rice,
   "flurazole" (benzyl 2-chloro-4-trifluoromethyl-1,3-thiazole-5-carboxylate) (S13-3), which is known as a seed-dressing safener for millet/sorghum against alachlor and metolachlor damage,
   "CL 304415" (CAS Reg. No. 31541-57-8) (4-carboxy-3,4-dihydro-2H-1-benzopyran-4-acetic acid) (S13-4) from American Cyanamid, which is known as a safener for maize against damage by imidazolinones,
   "MG 191" (CAS Reg. No. 96420-72-3) (2-dichloromethyl-2-methyl-1,3-dioxolane) (S13-5) from Nitrokemia, which is known as a safener for maize,
   "MG 838" (CAS Reg. No. 133993-74-5) (2-propenyl 1-oxa-4-azaspiro[4.5]decane-4-carbodithioate) (S13-6) from Nitrokemia,
   "disulfoton" (O,O-diethyl S-2-ethylthioethyl phosphorodithioate) (S13-7),
   "dietholate" (O,O-diethyl O-phenyl phosphorothioate) (S13-8),
   "mephenate" (4-chlorophenyl methylcarbamate) (S13-9).
S14) Active compounds which, in addition to herbicidal action against harmful plants, also have safener action on crop plants such as rice, for example "dimepiperate" or "MY-93" (S-1-methyl-1-phenylethylpiperidine-1-carbothioate), which is known as a safener for rice against damage by the herbicide molinate,
   "daimuron" or "SK 23" (1-(1-methyl-1-phenylethyl)-3-p-tolylurea), which is known as a safener for rice against imazosulfuron herbicide damage,
   "cumyluron" = "JC-940" (3-(2-chlorophenylmethyl)-1-(1-methyl-1-phenylethyl)urea, see JP-A-60087254), which is known as a safener for rice against damage by some herbicides,
   "methoxyphenone" or "NK 049" (3,3'-dimethyl-4-methoxybenzophenone), which is known as a safener for rice against damage by some herbicides,
   "CSB" (1-bromo-4-(chloromethylsulfonyl)benzene) from Kumiai, (CAS Reg. No. 54091-06-4), which is known as a safener against damage by some herbicides in rice.
S15) Compounds of the formula (S15) or tautomers thereof 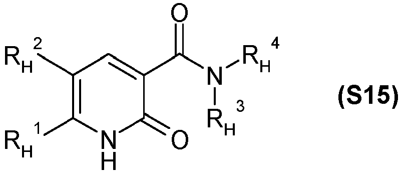
   as described in WO-A-2008/131861 and WO-A-2008/131860,
   in which
      R_{H}¹ represents a (C₁-C₆)-haloalkyl radical and
      R_{H}² represents hydrogen or halogen and
      R_{H}³, R_{H}⁴ independently of one another represent hydrogen, (C₁-C₁₆)-alkyl, (C₂-C₁₆)-alkenyl or (C₂-C₁₆)-alkynyl,
         where each of the 3 latter radicals is unsubstituted or substituted by one or more radicals from the group of halogen, hydroxyl, cyano, (C₁-C₄)-alkoxy, (C₁-C₄)-haloalkoxy, (C₁-C₄)-alkylthio, (C₂-C₄)-alkylamino, di[(C₁-C₄)-alkyl]amino, [(C₁-C₄)-alkoxy]carbonyl, [(C₁-C₄)-haloalkoxy]carbonyl, (C₃-C₆)-cycloalkyl which is unsubstituted or substituted, phenyl which is unsubstituted or substituted, and heterocyclyl which is unsubstituted or substituted,
         or (C₃-C₆)-cycloalkyl, (C₄-C₆)-cycloalkenyl, (C₃-C₆)-cycloalkyl fused on one side of the ring to a 4 to 6-membered saturated or unsaturated carbocyclic ring, or (C₄-C₆)-cycloalkenyl fused on one side of the ring to a 4 to 6-membered saturated or unsaturated carbocyclic ring,
         where each of the 4 latter radicals is unsubstituted or substituted by one or more radicals from the group of halogen, hydroxyl, cyano, (C₁-C₄)-alkyl, (C₁-C₄)-haloalkyl, (C₁-C₄)-alkoxy, (C₁-C₄)-haloalkoxy, (C₁-C₄)-alkylthio, (C₁-C₄)-alkylamino, di[(C₁-C₄)alkyl]amino, [(C₁-C₄)alkoxy]carbonyl, [(C₁-C₄)haloalkoxy]carbonyl, (C₃-C₆)-cycloalkyl which is unsubstituted or substituted, phenyl which is unsubstituted or substituted, and heterocyclyl which is unsubstituted or substituted,
         or
      R_{H}³ represents (C₁-C₄)-alkoxy, (C₂-C₄)-alkenyloxy, (C₂-C₆)-alkynyloxy or (C₂-C₄)-haloalkoxy and
      R_{H} ⁴ represents hydrogen or (C₁-C₄)-alkyl or
      R_{H}³ and R_{H}⁴ together with the directly attached nitrogen atom represent a four- to eight-membered heterocyclic ring which, as well as the nitrogen atom, may also contain further ring heteroatoms, preferably up to two further ring heteroatoms from the group of N, O and S, and which is unsubstituted or substituted by one or more radicals from the group of halogen, cyano, nitro, (C₁-C₄)-alkyl, (C₁-C₄)-haloalkyl, (C₁-C₄)-alkoxy, (C₁-C₄)-haloalkoxy and (C₁-C₄)-alkylthio.
S16) Active compounds which are used primarily as herbicides but also have safener action on crop plants, for example
   (2,4-dichlorophenoxy)acetic acid (2,4-D), (4-chlorophenoxy)acetic acid, (R,S)-2-(4-chloro-o-tolyloxy)propionic acid (mecoprop), 4-(2,4-dichlorophenoxy)butyric acid (2,4-DB), (4-chloro-o-tolyloxy)acetic acid (MCPA), 4-(4-chloro-o-tolyloxy)butyric acid, 4-(4-chlorophenoxy)butyric acid, 3,6-dichloro-2-methoxybenzoic acid (dicamba), 1-(ethoxycarbonyl)ethyl 3,6-dichloro-2-methoxybenzoate (lactidichlor-ethyl).

The term "crop" shall mean a plant or plant product that can be grown and harvested extensively for profit or subsitence.

The term "sprout inhibitor" or "sprout-inhibiting agent" shall mean a compound that suppresses or reduces sprout formation on crops for a certain time. Examples of sprout inhibitors are: ethylene, green mint oil, carvone, maleic hydrazide and 1,4-dimethylnaphthalene, isopropyl-(3-chlorophenyl)carbamate (CIPC, chlorpropham) extract of peppermint oil, rape oil methylester. Often mixtures of two or more sprout inhibitors are used for providing sufficient spout inhibition.

The term "combination" shall mean any mixture of compound of the formula (I) comprising one or more additional herbicide.

The term "composition" shall mean any mixture of compound of the formula (I) comprising other active ingredients and/or formulation agents and/or calcium and/or potashes.

Compounds of the formula (I) according to the invention show an excellent and desirable effect in terms of sprout inhibition in crops, more preferably in harvested crops without or without substantial injury to the crop and its quality.

"Quality" in this specific case means that the potatoes remain free of outer or inner damage, illnesses and diseases and stay healthy. It also means that they keep their typical taste and smell as well as typical consistency. Furthermore, the conversion of starch into sugars due to the development of sprouts should be prevented.

The treatment can take place as application up to 3 weeks prior to the actual harvest over the top of the plants, in storage when harvested goods have recovered from lesions or damages occurred during harvest and transport, and when natural dormancy starts to break after a period of storage time until they are shipped to their final destination in markets and processing plants.

Preferably, the crops are treated after being harvested until they are released from stock.

More preferably, the crops are treated after being harvested and recovered in storage, roughly seven days after arrival in storage until release from storage at about 3 months after harvest until up to 12 months after harvest. The treatment can be applied once or repeatedly.

"Harvested crop" in this specific case means the crop or more specifically the tubers and bulbs after being gathered from the field and recovered from damages and lesions which occurred during the harvesting process. The harvesting process includes the actual gathering of bulbs and tubers from the field, the transport to the storage facilities and storage location, which might comprise of several loading and unloading processes.

"Tuber" indicates a bulb, corm, stem tuber (potato) hypocotyl bulb, root tuber, bulb, depending on the crop it is harvested from. Most often a storage organ for the plant, used for human consumption.

Preferred crops are onions, cassava (*Manihot esculenta*), potatoes (*solanum tuberosum L*.) sweet potatoes (*Ipomoea batatas*)*, yams *(Dioscorea* spp.), tobinambur *(Helianthus tuberosus),* ginger *(Zingiber officinale).*

Especially preferred crops are potatoes.

Compounds (I) according to the invention is particularly suitable for use with ware potatoes and industrial potatoes.

Compounds (I) according to the invention can also be used to temporarily inhibit the sprouting of seed-potatoes.

However, the use of the active compounds and active compound combinations or compositions according to the invention is in no way restricted to these genera, but also extends in the same manner to other plants or crops or harvested crops. According to the invention crop plants are all plants and plant varieties including transgenic plants and plant varieties, where sprout inhibitors are also needed.

The application rates for the herbicidal compounds of formula (I) or salts thereof can vary within a broad range and is generally dependent on weather and storage conditions, as well as timing of the year and time after harvest, or whether the compounds are combined with other active ingredients inhibiting the sprouting. Suitable applications rates for compound of formula (I) generally are within the range of from 0.001 to 2000 g active ingredient (= compounds (I)) per tonne treated goods/tubers (a.i./to), preferably of from 0.01 to 500 g a.i./to, more preferably 0,1 bis 100 g a.i./to.

The invention thus also relates to a method of controlling harvested plants which comprises applying compound of formula **(I)** or combinations or compositions comprising thereof, together or one active ingredient after the other, optionally before or after the treatment with one or more other sprout inhibitor, to the crop.

Sprout inhibitors are expected to have an influence on the rate of respiration, if not during the dormant period, then at least after the termination of the formal rest period. Single and combined applications of sprout inhibitors reduce physiological losses being a big advantage.

In many cases the combinations/compositions are surprisingly more efficient/effective than the compounds alone.

Surprisingly, there are also superadditive (= synergistic) effects in the combined application of compound of formula **(I)** and further active ingredients. Here, the activity of the combination/composition is stronger than the expected sum of the activities of the individual compounds employed for sprout inhibition. The synergistic effects allow the application rate to be reduced further.

### Application

The composition can be used dry as a powder or granulate which is imparted to the potatoes as the storage space is being filled with them (this is the so-called basic treatment).

Instead of being used in the form of a powder or granulate, the composition can also be misted or sprayed over the potatoes while they are being stored in the storage location, as a liquid or an emulsion, either pure or mixed with a small amount of water.

Furthermore, composition can also be contacted with the potatoes at a later stage during the storage period by misting the composition in the storage space with the support of fans in that space.

In that case, depending on the desired form of application, the composition can also comprise a suitable carrier, suitable solvents, fillers or other substances conventionally present.

Suitable powdery or granular carriers and fillers are starch and starch derivatives, clay, talcum and other silicas, sand, diatomaceous earth, calcium carbonate and calcium sulfate (gypsum) and the various (co)polymers which can be used as carriers.

For making a granulate, an inert carrier can be mixed or impregnated with the respective composition.

Suitable for the application of the composition in a liquid form are the solvents of mineral origin, including aliphatic or aromatic solvents or mixtures thereof, which may or may not be chlorinated. Examples of these solvents are xylene, dichloromethane, ketones, aldehydes, alcohols such as glycerols (for instance polyethylene glycol), or derivatives or mixtures thereof. It is also possible to use solvents of animal or vegetable origin, such as linseed oil, soybean oil or derivatives thereof. It is also possible to use mixtures of such solvents of animal, vegetable and mineral origin.

Suitable adjuvants for spray or misting applications are cationic, anionic and non-ionic surface-active substances of animal, vegetable and mineral origin for example rape oil methyl esters or nonyl phenol polyglycol ethers, ethoxylated fatty acid alcohols or amines or derivatives or combinations thereof.

The extension of the active period that can be achieved through the use of the composition according to the present invention as sprout inhibitor at repetitive times during the storage periode.

The bulk potatoes are first dried, stored for a few days at about 15°C and then cooled in about two weeks to the desired storage temperature to ensure a good injury healing of damaged potatoes. This period of injury healing is necessary to limit microbial attack and weight losses during storage.

The injury healing period of the lot takes about 14 days.

After the injury healing period, the potatoes are stored at the desired storage temperature, the temperature being controlled through fresh air cooling or mechanical cooling.

The desired storage temperature is 2-4°C for seed-potatoes, 4-6°C for ware potatoes, 5-8°C for French fries and dry industry, and 7-10°C for chips.

After a sprouting dormancy of a few months after harvest, the potato begins to exhibit an inclination to sprout (depending on variety, history and storage method). In the course of time, this inclination to sprout grows increasingly stronger.

If cooling takes place in mechanical manner (so that the desired storage temperature can be reached rapidly), the chances of early sprouting are limited already. To inhibit sprouting in optimum manner, subsequently the composition according to the present invention is used.

The use of the composition according to the invention as sprout inhibitor now further elucidated.

The so-called basic treatment consists of imparting the composition (in the form of, for instance, powder or granules), for instance on a conveyor which conveys the potatoes to the storage space or on a roller table which the potatoes pass to reach the storage location. It is also possible to spray or atomize the composition over the potatoes (above the conveyor).

It is also possible to pass the composition to the storage space via the ventilation system. For this manner of application, the agent can for instance be atomized or sprayed in the air. For this purpose, it is possible to combine a mixture with a gaseous carrier so as to facilitate their introduction into the air stream. The two treatments can also be combined or be performed one after the other. The herbicidal compositions according to the invention can be present both as mixed formulations of components i) and ii) and, if appropriate, with further agrochemical active compounds, additives and/or customary formulation auxiliaries which are then applied in a customary manner diluted with water, or can be prepared as so-called tank mixes by joint dilution of the separately formulated or partially separately formulated components with water. In certain cases, the mixed formulations can be applied diluted with other liquids or solids, or else in undiluted form. The treatments can also be combined or be performed one after the other.

The mixtures/compositions according to the invention can be formulated in various ways, according to the biological and/or physicochemical parameters required. Examples of general formulation options are: wettable powders (WP), water-soluble concentrates, emulsifiable concentrates (EC), aqueous solutions (SL), emulsions (EW), such as oil-in-water and water-in-oil emulsions, sprayable solutions or emulsions, suspension concentrates (SC), dispersions, oil dispersions (OD), suspoemulsions (SE), dusts (DP), seed-dressing products, granules for soil application or spreading (GR) or water-dispersible granules (WG), ultra-low volume formulations, microcapsule dispersions or wax dispersions.

The individual types of formulation are known in principle and are described, for example, in: "Manual on Development and Use of FAO and WHO Specifications for Pesticides", FAO and WHO, Rome, Italy, 2002; Winnacker-Küchler, "Chemische Technologie" [Chemical Engineering], Volume 7, C. Hanser Verlag Munich, 4th Ed. 1986; van Valkenburg, "Pesticide Formulations", Marcel Dekker N.Y. 1973; K. Martens, "Spray Drying Handbook", 3rd Ed. 1979, G. Goodwin Ltd. London.

The formulation auxiliaries required, such as inert materials, surfactants, solvents and further additives, are likewise known and are described, for example, in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y.; Marsden, "Solvents Guide", 2nd Ed., Interscience, N.Y. 1950; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Athylenoxidaddukte [Interface-active ethylene oxide adducts]", Wiss. Verlagsgesellschaft, Stuttgart 1976, Winnacker Küchler, "Chemische Technologie [Chemical Engineering]", Volume 7, C. Hanser Verlag Munich, 4th Ed. 1986.

Based on these formulations, it is also possible to prepare combinations with other agrochemical active compounds such as fungicides, insecticides and also safeners, fertilizers and/or growth regulators, for example in the form of a readymix or as tank mix.

Wettable powders (sprayable powders) are products which are uniformly dispersible in water and which, besides the active compounds and in addition to one or more diluents or inert substances, also comprise ionic and/or nonionic surfactants (wetting agents, dispersants), for example polyoxyethylated alkylphenols, polyethoxylated fatty alcohols or fatty amines, propylene oxide/ethylene oxide copolymers, alkanesulfonates or alkylbenzenesulfonates or alkylnaphthalenesulfonates, sodium lignosulfonate, sodium 2,2'-dinaphthylmethane-6,6'-disulfonate, sodium dibutylnaphthalenesulfonate or else sodium oleoylmethyltaurate.

Emulsifiable concentrates are prepared by dissolving the active compounds in an organic solvent or solvent mixture, for example butanol, cyclohexanone, dimethylformamide, acetophenone, xylene or else higher-boiling aromatics or hydrocarbons with addition of one or more ionic and/or nonionic surfactants (emulsifiers). Examples of emulsifiers which may be used are: calcium alkylarylsulfonates such as calcium dodecylbenzenesulfonate, or nonionic emulsifiers such as fatty acid polyglycol esters, alkylaryl polyglycol ethers, fatty alcohol polyglycol ethers, propylene oxide-ethylene oxide copolymers, alkyl polyethers, sorbitan fatty acid esters, polyoxyethylene sorbitan fatty acid esters or polyoxyethylene sorbitol esters.

Dusting products are obtained by grinding the active compound with finely distributed solids, for example talc, natural clays, such as kaolin, bentonite and pyrophyllite, or diatomaceous earth.

Suspension concentrates are water-based suspensions of active compounds. They may be prepared, for example, by wet grinding by means of commercially available bead mills and optional addition of further surfactants as have, for example, already been listed above for the other formulation types. **In** addition to the suspended active compound or active compounds, other active compounds may also be present in the formulation in dissolved form.

Oil dispersions are oil-based suspensions of active compounds, where oil is to be understood as meaning any organic liquid, for example vegetable oils, aromatic or aliphatic solvents, or fatty acid alkyl esters. They can be prepared, for example, by wet grinding by means of commercially available bead mills and, if appropriate, addition of further surfactants (wetting agents, dispersants) as have already been mentioned, for example, above in the case of the other formulation types. In addition to the suspended active compound or active compounds, other active compounds may also be present in the formulation in dissolved form.

Emulsions, for example oil-in-water emulsions (EW), can be prepared, for example, by means of stirrers, colloid mills and/or static mixers from mixtures of water and water-immiscible organic solvents and, if appropriate, further surfactants as have already been mentioned, for example, above in the case of the other formulation types. Here, the active compounds are present in dissolved form.

Granules can be prepared either by spraying the active compound onto adsorptive, granulated inert material or by applying active compound concentrates to the surface of carriers such as sand, kaolinites, chalk or granulated inert material with the aid of adhesives, for example polyvinyl alcohol, sodium polyacrylate or else mineral oils. Suitable active compounds can also be granulated in the manner customary for the production of fertilizer granules - if desired as a mixture with fertilizers. Water-dispersible granules are produced generally by the customary processes such as spray-drying, fluidized-bed granulation, pan granulation, mixing with high-speed mixers and extrusion without solid inert material. For the production of pan, fluidized-bed, extruder and spray granules, see e.g. processes in "Spray-Drying Handbook" 3rd Ed. 1979, G. Goodwin Ltd., London; J.E. Browning, "Agglomeration", Chemical and Engineering 1967, pages 147 ff; "Perry's Chemical Engineer's Handbook", 5th Ed., McGraw Hill, New York 1973, p. 8-57.

For further details regarding the formulation of crop protection compositions, see, for example, G.C. Klingman, "Weed Control as a Science", John Wiley and Sons, Inc., New York, 1961, pages 81-96 and J.D. Freyer, S.A. Evans, "Weed Control Handbook", 5th Ed., Blackwell Scientific Publications, Oxford, 1968, pages 101-103.

The agrochemical formulations generally comprise from 0.1 to 99% by weight, in particular from 2 to 95% by weight, of active compounds of the herbicide components, the following concentrations being customary, depending on the type of formulation: In wettable powders, the active compound concentration is, for example, about 10 to 95% by weight, the remainder to 100% by weight consisting of customary formulation constituents. In the case of emulsifiable concentrates, the active compound concentration can be, for example, from 5 to 80% by weight. In most cases, formulations in the form of dusts comprise from 5 to 20% by weight of active compound, sprayable solutions comprise about 0.2 to 25% by weight of active compound. In the case of granules such as dispersible granules, the active compound content depends partially on whether the active compound is present in liquid or solid form and on which granulation auxiliaries and fillers are used. In water-dispersible granules, the content is generally between 10 and 90% by weight.

In addition, the active compound formulations mentioned optionally comprise the respective customary adhesives, wetting agents, dispersants, emulsifiers, preservatives, antifreeze agents and solvents, fillers, colourants and carriers, antifoams, evaporation inhibitors and pH- or viscosity-modifying agents.

The herbicidal action of the combinations/compositions according to the invention can be improved, for example, by surfactants, for example by wetting agents from the group of the fatty alcohol polyglycol ethers. The fatty alcohol polyglycol ethers preferably comprise 10 - 18 carbon atoms in the fatty alcohol radical and 2 - 20 ethylene oxide units in the polyglycol ether moiety. The fatty alcohol polyglycol ethers may be present in nonionic form, or ionic form, for example in the form of fatty alcohol polyglycol ether sulfates or phosphates, which are used, for example, as alkali metal salts (for example sodium salts and potassium salts) or ammonium salts, or even as alkaline earth metal salts, such as magnesium salts, such as C₁₂/C₁₄-fatty alcohol diglycol ether sulfate sodium (Genapol^{®} LRO, Clariant GmbH); see, for example, EP-A-0476555, EP-A-0048436, EP-A-0336151 or US-A-4,400,196 and also Proc. EWRS Symp. "Factors Affecting Herbicidal Activity and Selectivity", 227 - 232 (1988). Nonionic fatty alcohol polyglycol ethers are, for example, (C₁₀- C₁₈)-, preferably (C₁₀-C₁₄)-fatty alcohol polyglycol ethers (for example isotridecyl alcohol polyglycol ethers) which comprise 2 - 20, preferably 3 - 15, ethylene oxide units, for example from the Genapol^{®} X series, such as Genapol^{®} X-030, Genapol^{®} X-060, Genapol^{®} X-080 or Genapol^{®} X-150 (all from Clariant GmbH).

The present invention further comprises the mixtures of the combinations/compositions according to the invention with the wetting agents mentioned above from the group of the fatty alcohol polyglycol ethers which preferably contain 10 - 18 carbon atoms in the fatty alcohol radical and 2 - 20 ethylene oxide units in the polyglycol ether moiety and which may be present in nonionic or ionic form (for example as fatty alcohol polyglycol ether sulfates). Preference is given to sodium C₁₂/C₁₄-fatty alcohol diglycol ether sulfate (Genapol^{®} LRO, Clariant GmbH) and isotridecyl alcohol polyglycol ethers having 3 - 15 ethylene oxide units, for example from the Genapol^{®} X series, such as Genapol^{®} X-030, Genapol^{®} X-060, Genapol^{®} X-080 and Genapol^{®} X-150 (all from Clariant GmbH). It is also known that fatty alcohol polyglycol ethers, such as nonionic or ionic fatty alcohol polyglycol ethers (for example fatty alcohol polyglycol ether sulfates) are also suitable as penetrants and activity enhancers for a number of other herbicides, including herbicides from the group of the imidazolinones (see, for example, EP-A-0502014).

The herbicidal action of the combinations/compositions according to the invention can also be enhanced by using vegetable oils. The term vegetable oils is to be understood as meaning oils of oleaginous plant species, such as soybean oil, rapeseed oil, corn oil, sunflower oil, cottonseed oil, linseed oil, coconut oil, palm oil, thistle oil or castor oil, in particular rapeseed oil, and also their transesterification products, for example alkyl esters, such as rapeseed oil methyl ester or rapeseed oil ethyl ester.

The vegetable oils are preferably esters of C₁₀-C₂₂-, preferably C₁₂-C₂₀-, fatty acids. The C₁₀-C₂₂-fatty acid esters are, for example, esters of unsaturated or saturated C₁₀-C₂₂-fatty acids having, in particular, an even number of carbon atoms, for example erucic acid, lauric acid, palmitic acid and in particular C₁₈-fatty acids such as stearic acid, oleic acid, linoleic acid or linolenic acid.

Examples of C₁₀-C₂₂-fatty acid esters are esters which are obtained by reacting glycerol or glycol with the C₁₀-C₂₂-fatty acids present, for example, in oils of oleaginous plant species, or C₁₀-C₂₂-fatty acid C₁-C₂₀-alkyl esters which can be obtained, for example, by transesterification of the glycerol or glycol C₁₀-C₂₂-fatty acid esters mentioned above with C₁-C₂₀-alcohols (for example methanol, ethanol, propanol or butanol). The transesterification can be carried out by known methods as described, for example, in Römpp Chemie Lexikon, 9th edition, Volume 2, page 1343, Thieme Verlag Stuttgart.

Preferred C₁₀-C₂₂-fatty acid C₁-C₂₀-alkyl esters are methyl esters, ethyl esters, propyl esters, butyl esters, 2-ethylhexyl esters and dodecyl esters. Preferred glycol and glycerol C₁₀-C₂₂-fatty acid esters are the uniform or mixed glycol esters and glycerol esters of C₁₀-C₂₂-fatty acids, in particular fatty acids having an even number of carbon atoms, for example erucic acid, lauric acid, palmitic acid and in particular C₁₈-fatty acids such as stearic acid, oleic acid, linoleic acid or linolenic acid.

In the herbicidal combinations/compositions according to the invention, the vegetable oils can be present, for example, in the form of commercially available oil-containing formulation additives, in particular those based on rapeseed oil, such as Hasten^{®} (Victorian Chemical Company, Australia, hereinbelow referred to as Hasten, main ingredient: rapeseed oil ethyl ester), Actirob^{®}B (Novance, France, hereinbelow referred to as ActirobB, main ingredient: rapeseed oil methyl ester), Rako-Binol^{®} (Bayer AG, Germany, hereinbelow referred to as Rako-Binol, main ingredient: rapeseed oil), Renol^{®} (Stefes, Germany, hereinbelow referred to as Renol, vegetable oil ingredient: rapeseed oil methyl ester) or Stefes Mero^{®} (Stefes, Germany, hereinbelow referred to as Mero, main ingredient: rapeseed oil methyl ester).

In a further embodiment, the present invention embraces combinations of the components i) and ii) with the vegetable oils mentioned above, such as rapeseed oil, preferably in the form of commercially available oil-containing formulation additives, in particular those based on rapeseed oil, such as Hasten^{®}, Actirob^{®}B, Rako-Binol^{®}, Renol^{®} or Stefes Mero^{®}.

For application, the formulations in commercial form are, if appropriate, diluted in a customary manner, for example in the case of wettable powders, emulsifiable concentrates, dispersions and water-dispersible granules with water. Dust-type preparations, granules for soil application or granules for scattering and sprayable formulations are not normally diluted further with other inert substances prior to application.

The active compounds can be applied to the plants, plant parts, plant seeds or area under cultivation (soil), preferably on the green plants and plant parts, and optionally additionally to the soil.

One possible use is the joint application of the active compounds in the form of tank mixes, where the optimally formulated concentrated formulations of the individual active compounds are, together, mixed in a tank with water, and the spray liquor obtained is applied.

A joint herbicidal formulation of the herbicidal compositions according to the invention comprising the components i) and ii) has the advantage that it can be applied more easily since the quantities of the components are already adjusted to the correct ratio to one another. Moreover, the auxiliaries in the formulation can be optimized to one another.

### A. General formulation examples

a) A dust is obtained by mixing 10 parts by weight of an active compound/active compound mixture and 90 parts by weight of talc as inert substance and comminuting the mixture in a hammer mill.
b) A wettable powder which is readily dispersible in water is obtained by mixing 25 parts by weight of an active compound/active compound mixture, 64 parts by weight of kaolin-containing clay as inert substance, 10 parts by weight of potassium lignosulfonate and 1 part by weight of sodium oleoylmethyltaurate as wetting agent and dispersant, and grinding the mixture in a pinned-disc mill.
c) A suspension concentrate which is readily dispersible in water is obtained by mixing 20 parts by weight of an active compound/active compound mixture with 5 parts by weight of tristyrylphenol polyglycol ether (Soprophor BSU), 1 part by weight of sodium lignosulfonate (Vanisperse CB) and 74 parts by weight of water, and grinding the mixture in a friction ball mill to a fineness of below 5 microns.
d) An oil dispersion which is readily dispersible in water is obtained by mixing 20 parts by weight of an active compound/active compound mixture with 6 parts by weight of alkylphenol polyglycol ether (Triton^{®} X 207), 3 parts by weight of isotridecanol polyglycol ether (8 EO) and 71 parts by weight of paraffinic mineral oil (boiling range for example approx. 255 to 277°C), and grinding the mixture in a friction ball mill to a fineness of below 5 microns.
e) An emulsifiable concentrate is obtained from 15 parts by weight of an active compound/active compound mixture, 75 parts by weight of cyclohexanone as solvent and 10 parts by weight of oxyethylated nonylphenol as emulsifier.
f) Water-dispersible granules are obtained by mixing
   75 parts by weight of an active compound/active compound mixture,
   10 parts by weight of calcium lignosulfonate,
   5 parts by weight of sodium lauryl sulfate,
   3 parts by weight of polyvinyl alcohol and
   7 parts by weight of kaolin,
   grinding the mixture in a pinned-disk mill, and granulating the powder in a fluidized bed by spray application of water as a granulating liquid.
g) Water-dispersible granules are also obtained by homogenizing and precomminuting, in a colloid mill,
   25 parts by weight of an active compound/active compound mixture,
   5 parts by weight of sodium 2,2'-dinaphthylmethane-6,6'-disulfonate
   2 parts by weight of sodium oleoylmethyltaurate,
   1 part by weight of polyvinyl alcohol,
   17 parts by weight of calcium carbonate and
   50 parts by weight of water,
   then grinding the mixture in a bead mill and atomizing and drying the resulting suspension in a spray tower by means of a one-phase nozzle.

### B. Biological examples

### Description of the method

Application was done on a roller table and were applied with a spray application covering the outside of the tubers homogeneously with the spray solution containing with the respective dose of compound of formula (I) and depending on the treatment with the additional MSO (methylated seed oil) as indicated in the following tables. The spray solutions were prepared to match an equivalent of 10 L water per ton potato.

### Results of Sprout Inhibition Testing

**Table 1: Visual assessment of sprout development on stored potato tubers (Solanum tuberosum, variety: Columbia). Treatments calculated as application rate per ton fresh weight of potato at trial initiation. All treatments included a methylated seed oil (MSO, Destiny HC) at 0.5L / to fresh weight potatoes. Compound of formula (I) was formulated as SC 200, containing 200 g active (compound of formula (I)) per liter product.**

| | | | Relative inhibition of potato sprouting [%] | |
|---|---|---|---|---|
| | | | 0 DAA* | 71 DAA |
| Untreated Control | | | 0 | 0 |
| compound of formula (**I**) | 200 g / to | MSO 0.5 L/to | 0 | 95 |
| compound of formula (**I**) | 20 g / to | MSO 0.5 L/to | 0 | 93 |
| compound of formula (**I**) | 2 g / to | MSO 0.5 L/to | 0 | 73 |
| compound of formula (**I**) | 0.2 g / to | MSO 0.5 L/to | 0 | 67 |

| | | | | |
|---|---|---|---|---|
| *DAA means: Days after application | | | | |

**Table 2: Visual assessment of sprout development on stored potato tubers (Solanum tuberosum, variety: Columbia). Treatments calculated as application rate per ton fresh weight of potato at trial initiation. Compound of formula (I) was formulated as SC 200, containing 200 g active (compound of formula (I)) per liter product.**

| | | Relative inhibition of potato sprouting [%] | | |
|---|---|---|---|---|
| | | 0 DAA | 28 DAA | 71 DAA |
| Untreated Control | | 0 | 0 | 0 |
| compound of formula **(I)** | 20 g / to | 0 | 45 | 30 |
| compound of formula **(I)** | 2 g / to | 0 | 30 | 18 |

## Claims

1. Use of methyl(2R*,4R*)-4-[[(5S)-3-(3,5-difluorophenyl)-5-vinyl-4H-isoxazole-5-carbonyl]amino]tetrahydrofuran-2-carboxylate **(I),** which exists in the form of two stereoisomers: Methyl(2R,4R)-4-[[(5S)-3-(3,5-difluorophenyl)-5-vinyl-4H-isoxazole-5-carbonyl]-amino]tetrahydrofuran-2-carboxylate of formula (Ia) and methyl (2S,4S)-4-[[(5S)-3-(3,5-difluorophenyl)-5-vinyl-4H-isoxazole-5-carbonyl]amino]tetrahydrofuran-2-carboxylate of formula (Ib), for sprout inhibition:

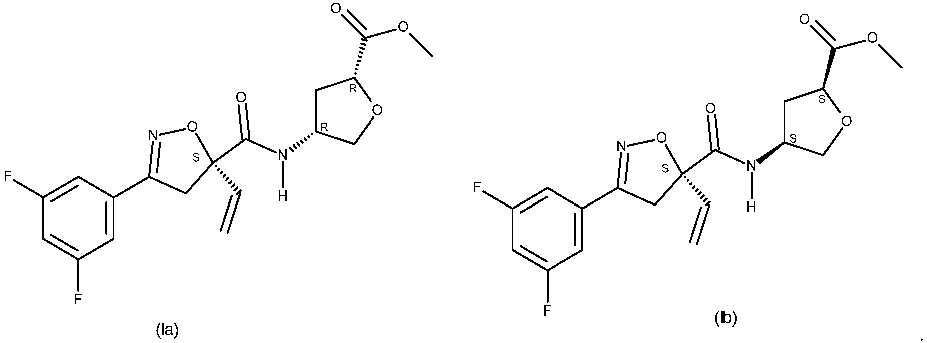

2. Use of methyl(2R*4R*)-4-[[(5S)-3-(3,5-difluorophenyl)-5-vinyl-4H-isoxazole-5-carbonyl]amino]tetrahydrofuran-2-carboxylate **(I)** according to claim 1 in combination with at least one additional sprout inhibitor for sprout inhibition.

3. Use of methyl(2R*,4R*)-4-[[(5S)-3-(3,5-difluorophenyl)-5-vinyl-4H-isoxazole-5-carbonyl]amino]tetrahydrofuran-2-carboxylate **(I)** according to claim 1 in combination with chlorpropham.

4. Use of methyl(2R*,4R*)-4-[[(5S)-3-(3,5-difluorophenyl)-5-vinyl-4H-isoxazole-5-carbonyl]amino]tetrahydrofuran-2-carboxylate **(I)** according to claim 1 in combination with extract of peppermint oil.

5. Use of methyl(2R*,4R*)-4-[[(5S)-3-(3,5-difluorophenyl)-5-vinyl-4H-isoxazole-5-carbonyl]amino]tetrahydrofuran-2-carboxylate **(I)** according to any of claims 1 to 4 in combination with at least one additional active ingredient from the group comprising herbicides, insecticides, acaricides, fungicides, safeners, fertilizers, growth regulators.

6. Use as claimed in any one of claims 1 to 5, **characterized by** applying compound of formula **(I)** or salts or combinations or compositions thereof to the harvested crop before or after emergence of the sprouts.

7. Use as claimed in any one of claims 1 to 6, **characterized by** applying from 0.01 to 2000 g of compound of formula **(I)** or salts or combinations or compositions thereof per tonne to the crop.

8. Method for controlling sprouts on crops, **characterized by** applying compounds of formula **(I)** or salts or combinations or compositions thereof to the crop.

9. Use/Method according to claims 1 to 8 **characterized in that** the crops are onions, cassava (*Manihot esculenta*), sweet potatoes (*Ipomoea batatas*), yams *(Dioscorea* spp.), tobinambur (*Helianthus tuberosus*), ginger *(Zingiber officinale).*

10. Use/Method according to claim 9 **characterized in that** the crop is potato.

## Patentansprüche

1. Verwendung von (2R*,4R*)-4-[[(5S)-3-(3,5-Difluorphenyl)-5-vinyl-4H-isoxazol-5-carbonyl]amino]tetrahydrofuran-2-carbonsäuremethylester (I), der in Form von zwei Stereoisomeren vorliegt: (2R,4R)-4-[[(5S)-3-(3,5-Difluorphenyl)-5-vinyl-4H-isoxazol-5-carbonyl]amino]tetrahydrofuran-2-carbonsäuremethylester der Formel (Ia) und (2S,4S)-4-[[(5S)-3-(3,5-Difluorphenyl)-5-vinyl-4H-isoxazol-5-carbonyl]amino]tetrahydrofuran-2-carbonsäuremethylester der Formel (Ib), zur Keimungshemmung:

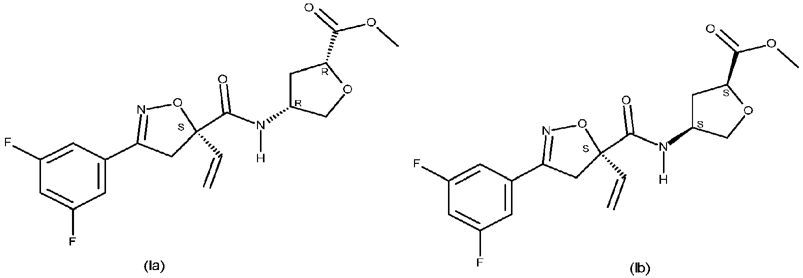

2. Verwendung von (2R*,4R*)-4-[[(5S)-3-(3,5-Difluorphenyl)-5-vinyl-4H-isoxazol-5-carbonyl]amino]tetrahydrofuran-2-carbonsäuremethylester (I) gemäß Anspruch 1 in Kombination mit mindestens einem zusätzlichen Keimungshemmer zur Keimungshemmung.

3. Verwendung von (2R*,4R*)-4-[[(5S)-3-(3,5-Difluorphenyl)-5-vinyl-4H-isoxazol-5-carbonyl]amino]tetrahydrofuran-2-carbonsäuremethylester (I) gemäß Anspruch 1 in Kombination mit Chlorpropham.

4. Verwendung von (2R*,4R*)-4-[[(5S)-3-(3,5-Difluorphenyl)-5-vinyl-4H-isoxazol-5-carbonyl]amino]tetrahydrofuran-2-carbonsäuremethylester (I) gemäß Anspruch 1 in Kombination mit Pfefferminzölextrakt.

5. Verwendung von (2R*,4R*)-4-[[(5S)-3-(3,5-Difluorphenyl)-5-vinyl-4H-isoxazol-5-carbonyl]amino]tetrahydrofuran-2-carbonsäuremethylester (I) nach einem der Ansprüche 1 bis 4 in Kombination mit mindestens einem zusätzlichen Wirkstoff aus der Herbizide, Insektizide, Akarizide, Fungizide, Safener, Düngemittel und Wachstumsregulatoren umfassenden Gruppe.

6. Verwendung nach einem der Ansprüche 1 bis 5, **dadurch gekennzeichnet, dass** man Verbindung der Formel (I) oder Salze oder Kombinationen oder Zusammensetzungen davon vor oder nach dem Austritt der Keimlinge auf die geerntete Kulturpflanze aufbringt.

7. Verwendung nach einem der Ansprüche 1 bis 6, **dadurch gekennzeichnet, dass** 0,01 bis 2000 g Verbindung der Formel (I) oder Salze oder Kombinationen oder Zusammensetzungen davon pro Tonne auf die Kulturpflanze aufgebracht werden.

8. Verfahren zur Bekämpfung von Trieben auf Kulturpflanzen, **dadurch gekennzeichnet, dass** man Verbindungen der Formel (I) oder Salzen oder Kombinationen oder Zusammensetzungen davon auf die Kulturpflanze aufbringt.

9. Verwendung/Verfahren nach den Ansprüchen 1 bis 8, **dadurch gekennzeichnet, dass** es sich bei den Kulturpflanzen um Zwiebeln, Maniok *(Manihot esculenta),* Süßkartoffeln (*Ipomoea batatas*), Yams *(Dioscorea* spp.), Tobinambur *(Helianthus tuberosus)* oder Ingwer *(Zingiber officinale)* handelt.

10. Verwendung/Verfahren nach Anspruch 9, **dadurch gekennzeichnet, dass** es sich bei der Kulturpflanze um Kartoffel handelt.

## Revendications

1. Utilisation du (2R*,4R*)-4-[[(5S)-3-(3,5-difluorophényl)-5-vinyl-4H-isoxazole-5-carbonyl]amino]tétrahydrofuran-2-carboxylate de méthyle (I), qui existe sous la forme de deux stéréoisomères : (2R,4R)-4-[[(5S)-3-(3,5-difluorophényl)-5-vinyl-4H-isoxazole-5-carbonyl]-amino]tétra-hydrofuran-2-carboxylate de méthyle de formule (Ia) et (2S,4S)-4-[[(5S)-3-(3,5-difluorophényl)-5-vinyl-4H-isoxazole-5-carbonyl]amino]tétrahydrofuran--2-carboxylate de méthyle de formule (Ib) pour l'inhibition de la germination :

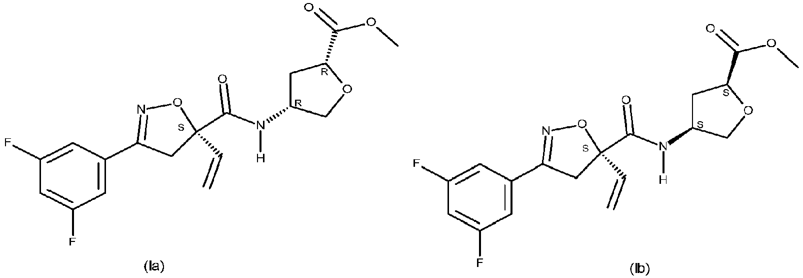

2. Utilisation du (2R*,4R*)-4-[[(5S)-3-(3,5-difluorophényl)-5-vinyl-4H-isoxazole-5-carbonyl]amino]tétrahydrofuran-2-carboxylate de méthyle (I) selon la revendication 1 en combinaison avec au moins un inhibiteur de germination supplémentaire pour inhiber la germination.

3. Utilisation du (2R*,4R*)-4-[[(5S)-3-(3,5-difluorophényl)-5-vinyl-4H-isoxazole-5-carbonyl]amino]tétrahydrofuran-2-carboxylate de méthyle (I) selon la revendication 1 en combinaison avec du chlorprophame.

4. Utilisation du (2R*,4R*)-4-[[(5S)-3-(3,5-difluorophényl)-5-vinyl-4H-isoxazole-5-carbonyl]amino]tétrahydrofuran-2-carboxylate de méthyle (I) selon la revendication 1 en combinaison avec un extrait d'huile de menthe poivrée.

5. Utilisation du (2R*,4R*)-4-[[(5S)-3-(3,5-difluorophényl)-5-vinyl-4H-isoxazole-5-carbonyl]amino]tétrahydrofuran-2-carboxylate de méthyle (I) selon l'une quelconque des revendications 1 à 4, en combinaison avec au moins un ingrédient actif supplémentaire du groupe comprenant des herbicides, insecticides, acaricides, fongicides, phytoprotecteurs, engrais, régulateurs de croissance.

6. Utilisation selon l'une quelconque des revendications 1 à 5, **caractérisée par** l'application d'un composé de formule (I) ou de sels ou de combinaisons ou de compositions de celui-ci sur la culture récoltée avant ou après la levée des pousses.

7. Utilisation selon l'une quelconque des revendications 1 à 6, **caractérisée par** l'application de 0,01 à 2 000 g de composé de formule (I) ou de sels ou de combinaisons ou de compositions de celui-ci par tonne sur la culture.

8. Procédé de régulation de pousses sur des cultures, **caractérisé par** l'application de composés de formule (I) ou de sels ou de combinaisons ou de compositions de ceux-ci sur la culture.

9. Utilisation/procédé selon les revendications 1 à 8, caractérisé(e) en ce que les cultures sont des oignons, du manioc *(Manihot esculenta),* de la patate douce (*Ipomoea batatas*), de l'igname *(Dioscorea* spp.), du topinambour *(Helianthus tuberosus),* du gingembre *(Zingiber officinale).*

10. Utilisation/procédé selon la revendication 9, caractérisé(e) en ce que la culture est la pomme de terre.
